# EUROPÄISCHE PATENTANMELDUNG

(11) **EP 4 796 797 A1**
(43) Veröffentlichungstag der Anmeldung: **26.08.2026**
(21) Anmeldenummer: 26159268.7
(22) Anmeldetag: 18.02.2026
(51) Int. Cl.: F16B 15/00

(54) **VERFAHREN ZUR ANORDNUNG EINER WÄRMETAUSCHERHALTERUNG UND / ODER EINES SCHALUNGSSCHONERS AN EINEM MAUERWERK**

(30) Priorität: 24.02.2025 AT 501242025; 28.05.2025 AT 5006925 U; 31.07.2025 AT 5501925 U
(71) Anmelder: KE KELIT GmbH, 4020 Linz (AT)
(72) Erfinder: Ratschmann, Elmar, 4202 Hellmonsödt (AT)
(74) Vertreter: Hübscher & Partner Patentanwälte GmbH

(57) **Zusammenfassung**

Es wird ein Verfahren zur Anordnung einer Wärmetauscherhalterung (1) und /oder eines Schalungsschoners an einem Mauerwerk (3) beschrieben. Erfindungsgemäß wird vorgeschlagen, dass als Befestigungsmittel (5) zur temporären Befestigung der Wärmetauscherhalterung (1) und / oder des Schalungsschoners auf der Schalung (4) ein Nagel bereitgestellt wird, der aus einem Kunststoff derart gefertigt ist, dass einerseits der Nagel durch Schlagbeanspruchung bruchfrei in die Schalung (4) eingebracht wird und diese teilweise durchsetzt, und dass andererseits infolge des Entfernens der Schalung (4) vom gegossenen Mauerwerk (3) der Nagel abgebrochen wird, sodass der im Mauerwerk (3) verbleibende Nagelabschnitt (6) überstandsfrei in Bezug auf die Mauerwerksoberfläche ist, wobei der sich vom Nagelkopf zur Nagelspitze hin stufenweise verjüngende Nagel wenigstens zwei Längsabschnitte unterschiedlichen Nageldurchmessers (d, D) aufweist, wobei der Längsabschnitt mit dem kleineren Durchmesser (d) voran in die Schalung (4) eingebracht wird.

## Beschreibung

Die Erfindung bezieht sich auf ein Verfahren zur Anordnung einer Wärmetauscherhalterung und /oder eines Schalungsschoners an einem Mauerwerk, wobei die Wärmetauscherhalterung und /oder der Schalungsschoner zunächst auf einer dem auszugießenden Mauerwerk zugeordneten Schalung angeordnet und auf dieser unter Verwendung eines Befestigungsmittels temporär befestigt wird, wonach das Mauerwerk ausgegossen und nach einer vorgegebenen Aushärtezeit die Schalung vom gegossenen Mauerwerk entfernt wird.

Für auszugießendes Mauerwerk, wie beispielsweise Betondecken oder -wände, ist es bekannt, im Hinblick auf eine Raumtemperierung Klimatisierungsvorrichtungen zu installieren, die von einem Temperierfluid durchströmte Rohrleitungen als Wärmetauscher aufweisen. Diese werden üblicherweise auf Wärmetauscherhalterungen in Form von Rohraufnahmeschienen befestigt, welche unter Verwendung eines Befestigungsmittels, insbesondere Eisennägel, temporär an einer Schalung befestigt werden. Nachdem das Mauerwerk ausgegossen wurde, wird die Schalung entfernt, wohingegen die Rohraufnahmeschienen sowie die Rohrleitungen selbst im Mauerwerk eingebettet sind. Dabei ergibt sich in der Praxis das Problem, dass die Eisennägel ebenfalls im gegossenen Mauerwerk verbleiben, wobei die Nagelspitzen aus der Mauerwerksoberfläche herausragen. Die abragenden Nagelspitzen müssen vom Installateur, beispielsweise mithilfe eines Trennschleifers, abgetragen werden, sodass die Mauerwerksoberfläche keine Nagelüberstände aufweist.

Hinzu kommt, dass aufgrund des aushärtenden Flüssigbetons die Eisennägel zu korrodieren beginnen, sodass sich in der Folge unerwünschte Rostflecken an der Mauerwerksoberfläche ausbilden.

Dieselbe Problematik ergibt sich in diesem Zusammenhang auch bei der Anordnung etwaiger Schalungsschoner, wie diese beispielsweise aus der DE10201610925A1 bekannt sind.

Der Erfindung liegt somit die Aufgabe zugrunde, ein Verfahren der eingangs geschilderten Art so auszugestalten, dass eine arbeits- und kosteneffiziente Anordnung von Wärmetauscherhalterungen und / oder Schalungsschonern an auszugießendem Mauerwerk ermöglicht und eine unerwünschte Beeinträchtigung des Erscheinungsbildes der Mauerwerksoberfläche vermieden wird.

Die Erfindung löst die gestellte Aufgabe dadurch, dass als Befestigungsmittel zur temporären Befestigung der Wärmetauscherhalterung und / oder des Schalungsschoners auf der Schalung ein Nagel bereitgestellt wird, der aus einem Kunststoff derart gefertigt ist, dass einerseits der Nagel durch Schlagbeanspruchung bruchfrei in die Schalung eingebracht wird und diese teilweise durchsetzt, und dass andererseits infolge des Entfernens der Schalung vom gegossenen Mauerwerk der Nagel abgebrochen wird, sodass der im Mauerwerk verbleibende Nagelabschnitt überstandsfrei in Bezug auf die Mauerwerksoberfläche ist, wobei der sich vom Nagelkopf zur Nagelspitze hin stufenweise verjüngende Nagel wenigstens zwei Längsabschnitte unterschiedlichen Nageldurchmessers aufweist, wobei der Nagel mit dem Längsabschnitt mit dem kleineren Durchmesser voran in die Schalung eingebracht wird. Damit wird bei kleinerem Nageldurchmesser im Bereich der Nagelspitze ein leichteres Eindringen des Nagels sichergestellt und ist zudem ein einfacheres Abbrechen des Nagels möglich, wenn die Schalung entfernt wird. Der größere Nageldurchmesser im Bereich des Nagelkopfes erhöht die Knicksicherheit beim Einschlagen des Nagels.

Zwecks weiterer Erhöhung der Knicksicherheit beim einschlagen des Nagels kann die Wärmetauscherhalterung und / oder der Schalungsschoner gegebenenfalls eine sich vom Anfang zum Ende hin stufenweise verjüngende Nagelführung umfassen, die einen Nagel beim Einbringen in die Schalung endseitig am Längsabschnitt mit dem kleineren Durchmesser und anfangsseitig am Längsabschnitt mit dem größeren Durchmesser führt.

Zwischen dem Längsabschnitt mit dem kleineren Durchmesser und dem Längsabschnitt mit dem größeren Durchmesser kann ein konus- oder absatzförmiger Übergang vorgesehen sein, der einen Anschlag für einen gegengleichen Übergang zwischen dem Längsabschnitt mit dem kleineren und dem größeren Durchmesser des Nagels bildet, an dem der in die Schalung eingebrachte Nagel zu liegen kommt. Neben dem Kopf des Kunststoffnagels bildet somit auch der Übergang einerseits eine Sicherung gegen zu weites Einschlagen des Nagels und anderseits wird damit die Sicherheit gegen ein Ausziehen des Nagels aus Wärmetauscherhalterung bzw. Schalungsschoner beim Entfernen der Schalung erhöht.

Der Kunststoff weist vorzugsweise eine Schlagzähigkeit nach ISO 179/1eU bei 23 °C von höchstens 130 kJ / m² und / oder eine Kerbschlagzähigkeit nach ISO 179/1eA bei 23 °C von höchstens 30 kJ / m² und / oder eine Bruchdehnung nach ISO 527 von höchstens 15 % und / oder einen E-Modul von mindestens 2300 MPa auf. Insbesondere weist der Kunststoff eine Schlagzähigkeit nach ISO 179/1eU bei 23 °C von höchstens 120 kJ / m², besonders bevorzugt höchstens 100 kJ / m², und / oder eine Kerbschlagzähigkeit nach ISO 179/1eA bei 23 °C von höchstens 25 kJ / m², besonders bevorzugt höchstens 20 kJ / m², und / oder eine Bruchdehnung nach ISO 527 von höchstens 12,5 %, noch bevorzugter höchstens 10 %, noch bevorzugter höchstens 7,5 %, noch bevorzugter höchstens 5 %, besonders bevorzugt höchstens 3,5 %, auf.

Der Erfindung liegt dabei die Überlegung zugrunde, dass ein auf Basis eines Kunststoffes mit wenigstens einem der anspruchsgemäßen Werkstoffkennwerte gefertigter Nagel, insbesondere wenn dieser spritzgegossen wurde, nagelrichtungsabhängige mechanische Eigenschaften ausbildet, die besonders vorteilhaft in Bezug auf den erfindungsgemäßen Anwendungsfall sind. Dabei bildet sich im Wesentlichen eine bezogen auf die Nagellängsrichtung uniaxiale Orientierung der der Polymermoleküle aus. Dies bewirkt, dass einerseits eine hohe Druckfestigkeit entlang der Nagellängsachse erreicht wird, welche bei typischen Schlagbeanspruchen wie Hammerschlägen parallel zur diesbezüglichen Hauptbeanspruchungsrichtung verläuft bzw. mit dieser im Wesentlichen zusammenfällt. Folglich kann der Nagel problemlos und ohne die Gefahr eines vorzeitigen Nagelbruchs in die Schalung, die in der Regel aus Holz besteht, eingebracht werden und dies teilweise durchsetzen. Andererseits weist der erfindungsgemäße Nagel quer zur Nagellängsrichtung eine im Vergleich deutlich geringere Druckfestigkeit auf, was vorzugsweise in Kombination mit einer insgesamt verringerten Schlagzähigkeit die Anfälligkeit für Sprödbrüche bei Krafteinwirkungen auf den Nagel quer zu dessen Längsachse erhöht. Wird somit die von den Nägeln teildurchsetze Schalung vom ausgehärteten Mauerwerk entfernt, d.h. beispielsweise parallel zur Mauerwerksoberfläche von dieser abgeschlagen, wird infolge der damit einhergehenden Schub- bzw. Scherbeanspruchung die in der Schalung versenkten Nagelspitzen derart auf vorteilhafte Weise ab, dass kein Nagelüberstand aus dem Mauerwerk herausragt.

Ein erfindungsgemäßer Nagel zeichnet sich dadurch aus, dass er sich vom Nagelkopf zur Nagelspitze hin stufenweise verjüngt und wenigstens zwei Längsabschnitte unterschiedlichen Nageldurchmessers aufweist. Der Längsabschnitt mit dem kleineren Durchmesser ist nagelspitzenseitig und der Längsabschnitt mit dem größeren Durchmesser nagelkopfseitig. Der kleinere Durchmesser ist beispielsweise 10 bis 30%, insbesondere 20%, kleiner als der größere Durchmesser. Der Längsabschnitt mit dem größeren Durchmesser und der Längsabschnitt mit dem kleineren Durchmesser sind vorzugsweise gleich lang, unterscheiden sich in der Länge aber insbesondere um nicht mehr als 10 bis 30%, insbesondere 20%.

Zwischen dem Längsabschnitt mit dem kleineren Durchmesser und dem Längsabschnitt mit dem größeren Durchmesser kann ein konus- oder absatzförmiger Übergang vorgesehen sein. Der Konus hat beispielsweise einen Steigungswinkel von 5 bis 15°, insbesondere von 10°.

Die für den erfindungsgemäßen Zweck vorteilhafte Richtungsabhängigkeit der mechanischen Eigenschaften des Nagels kann noch weiter erhöht werden, wenn in die Kunststoffmatrix Füll- oder Verstärkungsstoffe bzw. Fasern eingebettet sind. Insbesondere kann der Nagel aus einem faserverstärkten, insbesondere glas-, kohle- oder basaltfaserverstärkten Kunststoff gefertigt sein. Obwohl grundsätzlich auch eine duroplastische Matrix vorgesehen sein kann, empfiehlt sich im Hinblick auf besonders günstige Fertigungsbedingungen der Einsatz einer thermoplastischen Matrix. Ein erfindungsgemäßer Nagel umfasst bevorzugt eine thermoplastische Matrix auf Basis von beispielsweise Polyamid, Polypthalamid, Polyphenylensulfon, Polyoxymethylen, Polybutylenterephthalat, Polyethylenterephthalat, Polyetheretherketon und / oder Polyimid.

Um ein überstandsfreies Abbrechen des Nagels weiter zu unterstützen, empfiehlt es sich, dass der Nagel an seinem Nagelschaft eine Sollbruchstelle aufweist. Diese kann beispielsweise durch eine Kerbe gebildet sein. Die Sollbruchstelle befindet sich vorzugsweise an jener Stelle des Nagels, die im geschalten Zustand im Kontaktbereich zwischen der Wärmtauscherhalterung bzw. dem Schalungsschoner einerseits und der Schalung andererseits liegt, sodass nach erfolgtem Nagelbruch kein Nagelüberstand aus dem Mauerwerk herausragt.

Besonders günstige Werkstoffeigenschaften des Nagels, insbesondere in Bezug auf eine vorteilhafte niedrige Schlagzähigkeit, eine vorteilhafte Faseranisotropie, sowie einer vorteilhaften Druckfestigkeit parallel zur Nagellängsachse werden dadurch erreicht, wenn der Nagel einen Fasergehalt im Bereich von 20 - 65 Gew% an Glasfasern aufweist, wobei die Glasfasern ein Aspektverhältnis, d.h. ein Verhältnis der Faserlänge zur Faserdicke, im Bereich von 25 - 30 aufweisen. Die Faserlänge liegt beispielsweise bei 250 µm, die Faserdicke bei 9 µm. Der Fasergehalt, d.h. der Massengehalt der Fasern an der Gesamtmasse des faserverstärkten Thermoplasten, liegt vorzugsweise bei 50 Gew%.

Für ein möglichst vorteilhaftes Werkstoffverhalten und eine zuverlässige Handhabung des Nagels sowohl beim Einbringen in die Schalung, als auch beim Entfernen der Schalung vom ausgehärteten Mauerwerk, empfiehlt es sich, dass der Nagel durch ein Spritzgussverfahren erhalten wird, wobei der Nagel bezogen auf dessen Längsachse eine im Wesentlichen uniaxiale Faserorientierung aufweist.

Vor diesem Hintergrund bezieht sich die Erfindung auch auf ein Verfahren zur Herstellung eines Nagels zur Verwendung in einem erfindungsgemäßen Verfahren zur Anordnung einer Wärmetauscherhalterung und /oder eines Schalungsschoners an einem Mauerwerk. Dabei wird der Nagel auf Basis eines glasfaserverstärkten Thermoplasten spritzgegossen, wobei ein Spritzgießwerkzeug mit einem Angusssystem bereitgestellt wird, dessen Anschnitt in Fließrichtung nagelspitzenseitig in das Formnest für den Nagel mündet. Bei entsprechender Einstellung der Fließgeschwindigkeit kann dadurch einerseits eine hohe Faser- und Polymermolekülorientierung parallel zur Nagellängsachse im nagelkopfseitige Bereich erreicht werden, wohingegen der nagelspitzenseitige Bereich von einer höheren Faseranisotropie geprägt ist. Da in der Regel der nagelspitzenseitige Bereich des Nagels jener ist, der die Schalung teilweise durchsetzt, erleichtert die höhere Faseranisotropie im nagelspitzenseitigen Bereich das Abbrechen des Nagels beim Entfernen der Schalung vom Mauerwerk.

Die Wärmetauscherhalterung und / oder der Schalungsschoner können eine sich vom Anfang zum Ende hin stufenweise verjüngende Nagelführung aufweisen, wobei gegebenenfalls zwischen dem Längsabschnitt mit dem kleineren Durchmesser und dem Längsabschnitt mit dem größeren Durchmesser ein konus- oder absatzförmiger Übergang vorgesehen ist, der einen Anschlag für einen gegengleichen Übergang zwischen dem Längsabschnitt mit dem kleineren und dem größeren Durchmesser des Nagels bildet.

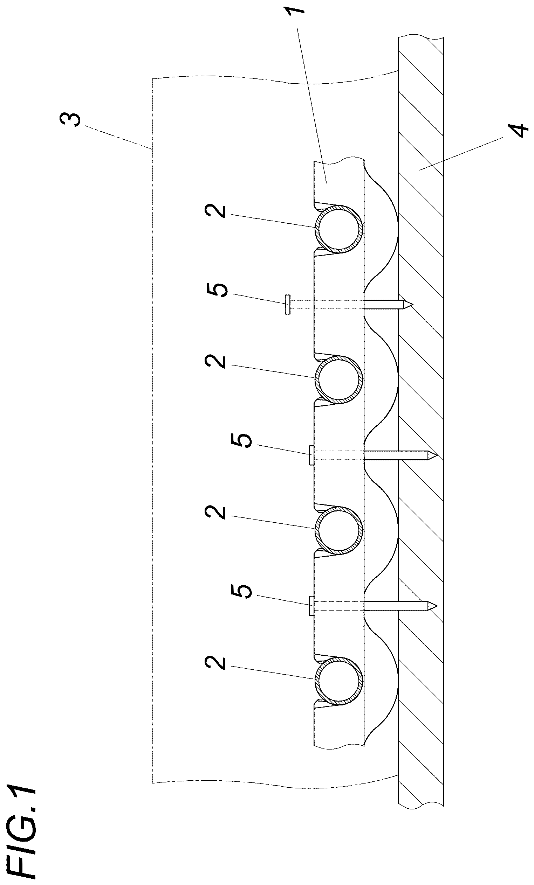

In der Zeichnung ist der Erfindungsgegenstand beispielsweise dargestellt. Es zeigen
- Fig. 1: eine schematische Schnittansicht einer auf einer Schalung angeordneten und an dieser mit Nägeln temporär befestigten Wärmetauscherhalterung,
- Fig. 2: eine der Fig. 1 entsprechende Darstellung bei bereits entfernter Schalung und
- Fig. 3: eine vergrößerte, detailliertere und teilgeschnittene Ansicht der Vorrichtnug aus Fig. 1 mit dem erfindungsgemäßen Nagel.

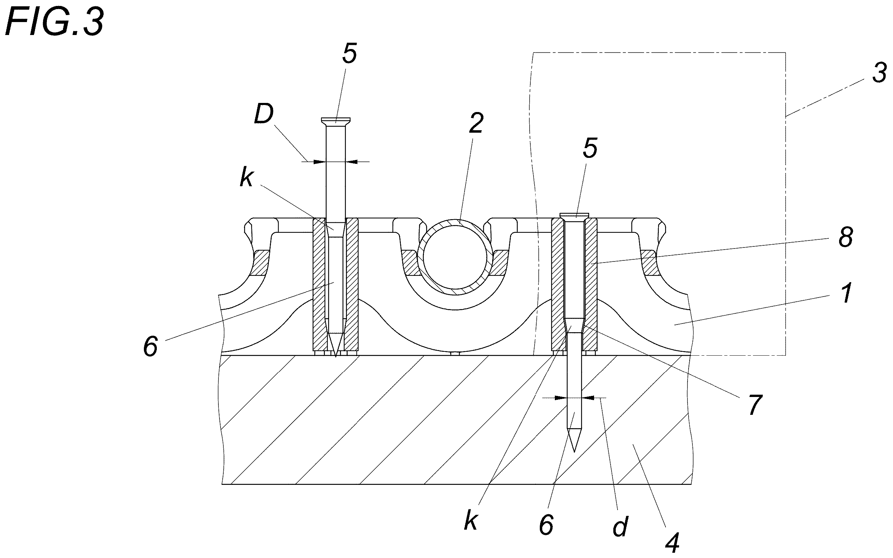

Zur Durchführung eines erfindungsgemäßen Verfahren gemäß Anspruch 1 wird zunächst eine Wärmetauscherhalterung 1, wie beispielsweise die gezeigte Rohraufnahmeschiene für Rohrleitungen 2 einer Deckentemperiervorrichtung, auf einer einem auszugießenden Mauerwerk 3 zugeordneten Schalung 4 angeordnet. Mithilfe von Befestigungsmitteln 5 in Form von Nägeln wird die Wärmetauscherhalterung 1 temporär an der Schalung 4 befestigt. Dabei dringen die Nägel mit ihrem nagelspitzenseitigen Bereich in die Schalung 4 ein und durchsetzen diese somit teilweise. Der Nagel verjüngt sich vom Nagelkopf zur Nagelspitze hin stufenweise und weist wenigstens zwei Längsabschnitte unterschiedlichen Nageldurchmessers d, D auf (Fig. 3). Zwischen dem Längsabschnitt mit dem kleineren Durchmesser d und dem Längsabschnitt mit dem größeren Durchmesser D ist ein konusförmiger Übergang k vorgesehen.

Die Wärmetauscherhalterung 1 und / oder der Schalungsschoner weist eine sich vom Anfang zum Ende hin stufenweise verjüngende Nagelführung 8 auf (Fig. 3), wobei zwischen dem Längsabschnitt mit dem kleineren Durchmesser und dem Längsabschnitt mit dem größeren Durchmesser ein Konus Übergang vorgesehen ist, der einen Anschlag 7 für einen gegengleichen Übergang zwischen dem Längsabschnitt mit dem kleineren und dem größeren Durchmesser d, D des Nagels bildet. Zwischen Nagel und Nagelführung 8 kann eine Passung vorgesehen sein. Den Anfang der Nagelführung 8 bildet jene Seite in die der Nagel mit seiner Spitze voran eingesetzt wird und das Ende der Nagelführung 8 die gegenüberliegende Seite, aus welcher der Nagel austritt, bevor er in die Schalung 4 eingebracht wird.

Um ein möglichst zuverlässiges Einbringen der Nägel in die Schalung 4 zu ermöglichen, weist die Wärmetauscherhalterung 1 die in Fig. 3 dargestellte Nagelführung 8 auf, in welche die Nägel eingeführt und dadurch für den darauffolgenden Hammerschlag bereits vorpositioniert werden.

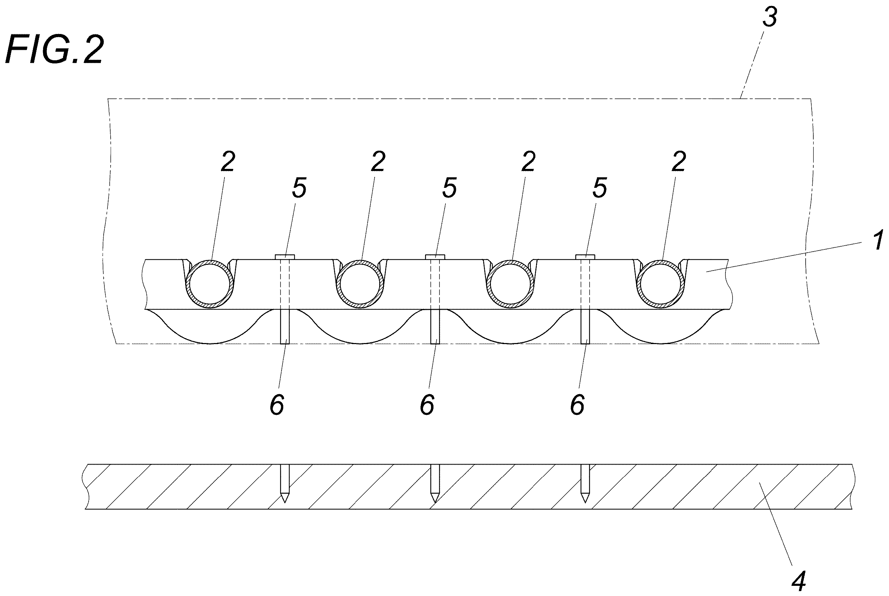

Nachdem das gegossene Mauerwerk 3 ausreichend ausgehärtet ist, wird die Schalung 4 vom Mauerwerk 3 entfernt. Hierzu kann vorgesehen sein, dass die Schalung 4 mit einer im Wesentlichen parallel zur Mauerwerksoberfläche sowie quer zur Nagellängsachse verlaufenden schlagbeanspruchen abgeschlagen wird. Im Zuge dieser Scher- bzw. Schubbeanspruchung bedingt die dadurch auf die Nägel einwirkende Kraftbeaufschlagung, dass diese in Form eines Sprödbruches so abbrechen, dass die im Mauerwerk 3 verbleibenden Nägelabschnitte 6 überstandsfrei in Bezug auf die Mauerwerksoberfläche sind, wie dies in Fig. 2 dargestellt ist.

Um sowohl ein zuverlässiges Einbringen in die Schalung 4 einerseits, als auch ein möglichst überstandsfreies Abbrechen bei Entfernen der Schalung 4 andererseits zu ermöglichen, sind die verwendeten Nägel aus einem glasfaserverstärkten Polyamid gefertigt, das unter der Handelsbezeichnung Grivory^{®} GV-5H black 9915 erhältlich ist. Der Werkstoff weist eine Bruchdehnung nach ISO 527 von höchstens 2,5 % sowie eine Schlagzähigkeit nach ISO 179/1eU (23 °C) von höchstens 90 kJ/m² auf. Der Fasergehalt beträgt 50 Gew%. Die Glasfasern weisen eine Länge von von 250 µm und eine Faserdicke von 9 µm auf. Dies entspricht einem Aspektverhältnis von ca. 27,78.

Die Nägel wurden spritzgegossen, wobei ein Spritzgießwerkzeug mit einem Angusssystem bereitgestellt wurde, dessen Anschnitt in Fließrichtung nagelspitzenseitig in das Formnest für den Nagel mündet. Dadurch wird parallel zur Nagellängsachse eine hohe Faser- und Polymermolekülorientierung im nagelkopfseitigen Bereich und somit eine hohe Druckfestigkeit erreicht, die das Einschlagen des Nagels in die Schalung 4 auf zuverlässige Weise ermöglicht. Umgekehrt erleichtert die höhere Faseranisotropie im nagelspitzenseitigen Bereich das Abbrechen des Nagels beim Entfernen der Schalung 4 vom Mauerwerk 3.

## Patentansprüche

1. Verfahren zur Anordnung einer Wärmetauscherhalterung (1) und /oder eines Schalungsschoners an einem Mauerwerk (3), wobei die Wärmetauscherhalterung (1) und /oder der Schalungsschoner zunächst auf einer dem auszugießenden Mauerwerk (3) zugeordneten Schalung (4) angeordnet und auf dieser unter Verwendung eines Befestigungsmittels (5) temporär befestigt wird, wonach das Mauerwerk (3) ausgegossen und nach einer vorgegebenen Aushärtezeit die Schalung (4) vom gegossenen Mauerwerk (3) entfernt wird, **dadurch gekennzeichnet, dass** als Befestigungsmittel (5) zur temporären Befestigung der Wärmetauscherhalterung (1) und / oder des Schalungsschoners auf der Schalung (4) ein Nagel bereitgestellt wird, der aus einem Kunststoff derart gefertigt ist, dass einerseits der Nagel durch Schlagbeanspruchung bruchfrei in die Schalung (4) eingebracht wird und diese insbesondere teilweise durchsetzt, und dass andererseits infolge des Entfernens der Schalung (4) vom gegossenen Mauerwerk (3) der Nagel abgebrochen wird, sodass der im Mauerwerk (3) verbleibende Nagelabschnitt überstandsfrei in Bezug auf die Mauerwerksoberfläche ist, wobei der sich vom Nagelkopf zur Nagelspitze hin stufenweise verjüngende Nagel wenigstens zwei Längsabschnitte unterschiedlichen Nageldurchmessers (D, d) aufweist, wobei der Nagel mit dem Längsabschnitt mit dem kleineren Nageldurchmesser (d) voran in die Schalung (4) eingebracht wird.

2. Verfahren nach Anspruch 1, **dadurch gekennzeichnet, dass** die Wärmetauscherhalterung (1) und / oder der Schalungsschoner eine sich vom Anfang zum Ende hin stufenweise verjüngende Nagelführung (8) umfasst, die einen Nagel beim Einbringen in die Schalung (4) endseitig am Längsabschnitt mit dem kleineren Durchmesser und anfangsseitig am Längsabschnitt mit dem größeren Durchmesser führt.

3. Verfahren nach Anspruch 1 oder 2, **dadurch gekennzeichnet, dass** zwischen dem Längsabschnitt mit dem kleineren Durchmesser und dem Längsabschnitt mit dem größeren Durchmesser ein konus- oder absatzförmiger Übergang vorgesehen ist, der einen Anschlag für einen gegengleichen Übergang (k) zwischen dem Längsabschnitt mit dem kleineren und dem größeren Durchmesser (d, D) des Nagels bildet, an dem der in die Schalung (4) eingebrachte Nagel zu liegen kommt.

4. Verfahren nach einem der Ansprüche 1 bis 3, **dadurch gekennzeichnet, dass** der Kunststoff eine Schlagzähigkeit nach ISO 179/1eU bei 23 °C von höchstens 130 kJ / m² und / oder eine Kerbschlagzähigkeit nach ISO 179/1eA bei 23 °C von höchstens 30 kJ / m² und / oder eine Bruchdehnung nach ISO 527 von höchstens 15 % und / oder einen E-Modul von mindestens 2300 MPa aufweist.

5. Verfahren nach einem der Ansprüche 1 bis 4, **dadurch gekennzeichnet, dass** der Nagel aus einem faserverstärkten, insbesondere glas-, kohle- oder basaltfaserverstärkten Kunststoff, vorzugsweise einem Thermoplasten, gefertigt ist.

6. Verfahren nach Anspruch 5, **dadurch gekennzeichnet, dass** der Nagel einen Fasergehalt im Bereich von 20 - 65 Gew% an Glasfasern aufweist, wobei die Glasfasern ein Aspektverhältnis im Bereich von 25 - 30 aufweisen.

7. Verfahren nach einem der Ansprüche 1 bis 6, **dadurch gekennzeichnet, dass** der Nagel durch ein Spritzgussverfahren erhalten wird, wobei der Nagel bezogen auf dessen Längsachse eine im Wesentlichen uniaxiale Füll-bzw. Verstärkungsstoff- und / oder Faserorientierung aufweist.

8. Verfahren nach einem der Ansprüche 1 bis 7, **dadurch gekennzeichnet, dass** die thermoplastische Matrix des Nagels ein Polyamid, Polypthalamid, Polyphenylensulfon, Polyoxymethylen, Polybutylenterephthalat, Polyethylenterephthalat, Polyetheretherketon und / oder Polyimid ist.

9. Verfahren zur Herstellung eines Nagels zur Verwendung in einem Verfahren nach einem der Ansprüche 1 bis 8, **dadurch gekennzeichnet, dass** der Nagel auf Basis eines glasfaserverstärkten Thermoplasten spritzgegossen wird, wobei ein Spritzgießwerkzeug mit einem Angusssystem bereitgestellt wird, dessen Anschnitt in Fließrichtung nagelspitzenseitig in das Formnest für den Nagel mündet.

10. Nagel aus Kunststoff, insbesondere zur Verwendung in einem Verfahren nach einem der Ansprüche 1 bis 9, der durch ein Spritzgussverfahren erhältlich ist, **dadurch gekennzeichnet, dass** der Nagel sich vom Nagelkopf zur Nagelspitze hin stufenweise verjüngt und wenigstens zwei Längsabschnitte unterschiedlichen Nageldurchmessers aufweist.

11. Nagel nach Anspruch 10, **dadurch gekennzeichnet, dass** zwischen dem Längsabschnitt mit dem kleineren Durchmesser und dem Längsabschnitt mit dem größeren Durchmesser ein konus- oder absatzförmiger Übergang vorgesehen ist.

12. Nagel nach Anspruch 10 oder 11, **gekennzeichnet durch** eine thermoplastische Matrix, in welche Glasfasern bei einem Fasergehalt im Bereich von 20 - 65 Gew% unter einer im Wesentlichen uniaxialen Faserausrichtung bezüglich der Nagellängsachse eingebettet sind, wobei die Glasfasern ein Aspektverhältnis im Bereich von 25 - 30 aufweisen.

13. Nagel nach Anspruch 10, **dadurch gekennzeichnet, dass** die thermoplastische Matrix des Nagels ein Polyamid, Polypthalamid, Polyphenylensulfon, Polyoxymethylen, Polybutylenterephthalat, Polyethylenterephthalat, Polyetheretherketon und / oder Polyimid ist.

14. Nagel nach Anspruch 10 oder 11, **dadurch gekennzeichnet, dass** der glasfaserverstärkte Thermoplast eine Schlagzähigkeit nach ISO 179/1eU bei 23 °C von höchstens 130 kJ / m² und / oder eine Kerbschlagzähigkeit nach ISO 179/1eA bei 23 °C von höchstens 30 kJ / m² und / oder eine Bruchdehnung nach ISO 527 von höchstens 15 % aufweist und / oder einen E-Modul von mindestens 2300 MPa.

15. Wärmetauscherhalterung (1) und /oder der Schalungsschoner zur Verwendung in einem Verfahren nach einem der Ansprüche 1 bis 9, **dadurch gekennzeichnet, dass** die Wärmetauscherhalterung (1) und / oder der Schalungsschoner eine sich vom Anfang zum Ende hin stufenweise verjüngende Nagelführung aufweist, wobei zwischen dem Längsabschnitt mit dem kleineren Durchmesser und dem Längsabschnitt mit dem größeren Durchmesser ein konus- oder absatzförmiger Übergang vorgesehen ist, der einen Anschlag für einen gegengleichen Übergang zwischen dem Längsabschnitt mit dem kleineren und dem größeren Durchmesser des Nagels bildet.
